# FASCICULE DE BREVET EUROPEEN

(11) **EP 2 106 431 B1**
(45) Date de publication et mention de la délivrance du brevet: **21.08.2024**
(21) Numéro de dépôt: 07870370.9
(22) Date de dépôt: 30.11.2007
(51) Int. Cl.: C10G 45/02, C10G 45/08, C10G 65/12, C10G 3/00

(54) **PROCEDE DE CONVERSION DE CHARGES ISSUES DE SOURCES RENOUVELABLES POUR PRODUIRE DES BASES CARBURANTS GAZOLES DE FAIBLE TENEUR EN SOUFRE ET DE CETANE AMELIORE**
VERFAHREN ZUR UMWANDLUNG VON LASTEN AUS ERNEUERBAREN QUELLEN ZUR HERSTELLUNG EINES DIESELKRAFTSTOFF-BASISMATERIALS MIT NIEDRIGEM SCHWEFEL- UND ERHÖHTEM KETAN-ANTEIL
METHOD FOR CONVERTING LOADS FROM RENEWABLE SOURCES FOR PRODUCING DIESEL FUEL BASES HAVING LOW-SULPHUR AND ENHANCED-KETANE CONTENTS

(30) Priorité: 21.12.2006 FR 0611400
(43) Date de publication de la demande: 07.10.2009
(73) Titulaire: IFP Energies nouvelles, 92500 Rueil-Malmaison (FR)
(72) Inventeur: CHAPUS, Thierry, F-69001 Lyon (FR); MARCHAND, Karin, F-69008 Lyon (FR)
(74) Mandataire: IFP Energies nouvelles
(86) Numéro de dépôt international: PCT/FR2007/001976
(87) Numéro de publication internationale: WO 2008/081100

(56) Documents cités:
- EP-A1- 1 681 337
- EP-A1- 1 693 432
- EP-A1- 1 741 768
- FR-A1- 2 826 971
- FR-A1- 2 846 574

## Description

La présente invention concerne un procédé pour le traitement de charges provenant de sources renouvelables, intégré avec les procédés de raffinage existants. Elle concerne un procédé permettant de convertir au moins en partie une charge d'hydrocarbures, par exemple un distillat sous vide obtenu par distillation directe d'un pétrole brut, et également une charge issue d'une source renouvelable, de façon à produire d'une part une base gazole de bonne qualité, c'est à dire répondant aux spécifications 2005 en soufre (moins de 50 ppm) et d'indice de cétane amélioré, et d'autre part un produit plus lourd pouvant être avantageusement utilisé comme charge pour le craquage catalytique (tel que le craquage catalytique en lit fluide).

### État de la technique antérieure

La demande de brevet EP 1,693,432 A1 (Petrobras) décrit un procédé permettant l'hydroconversion de mélange d'huiles végétales (de 1% à 75% vol.) et d'hydrocarbures (de 99 % à 25 % vol.) dans un seul réacteur d'hydrotraitement, sous une pression de 4 MPa à 10 MPa, avec un lit catalytique de type NiMo ou CoMo opéré à une température comprise entre 320° C et 400°C. L'intérêt de cette approche est le gain en terme d'indice de cétane et de diminution de densité apportés par le mélange avec l'huile végétale par rapport aux propriétés obtenues par traitement direct de la base pétrolière. En outre, le mélange des charges hydrocarbonées avec les huiles végétales permet d'améliorer les propriétés à froid des effluents obtenus par rapport à ceux qui seraient obtenus par un traitement des huiles végétales seules.

Les spécifications actuelles de teneur en soufre dans les gazoles sont actuellement de 50 ppm de soufre dans de nombreux pays, avec une tendance pour limiter cette teneur à 10 ppm de soufre maximum.

Le déposant a donc recherché un procédé permettant d'atteindre ce but.

### Résumé de l'invention

Plus précisément, l'invention concerne un procédé de traitement :
- d'une charge pétrolière dont au moins 80 % pds bout au-dessus de 340°C, et contenant au moins 0,05 % pds de soufre et;
- d'une charge issue d'une source renouvelable, contenant des huiles végétales brutes ou raffinées et/ou des graisses animales. Ces charges contiennent typiquement des structures triglycérides et/ou des acides gras, la structure chimique de ces derniers correspondant à celle des hydrocarbures présents dans les gazoles.

Le procédé de traitement selon l'invention, de charges pétrolières dont au moins 80 % poids bout au-dessus de 340°C, et contenant au moins 0,05 % poids de soufre, lesdites charges pétrolières étant choisies dans le groupe formé par les distillats sous vide de distillation directe, les distillats sous vide issus de procédé de conversion, les huiles désasphaltées, les résidus issus des procédés de conversion des charges lourdes, pris seuls ou en mélange, pour produire au moins une coupe gazole à teneur en soufre d'au plus 10 ppm poids et de manière préférée d'au plus 10 ppm poids, comprend les étapes suivantes :
a) hydrocraquage doux en lit fixe d'au moins un catalyseur comprenant de 0,5 à 10 % en poids d'oxyde de nickel et de 1 à 30 % en poids d'oxyde de molybdène, sur un support minéral amorphe, à une température comprise entre 350 et 450°C, une pression comprise entre 2,5 MPa et 7 MPa, une vitesse spatiale horaire comprise entre 0,2 h⁻¹ et 5 h⁻¹ et en présence de 200 à 1500 Nm3 d'hydrogène/m3 de charge, la conversion nette en produits bouillant en-dessous de 360°C étant comprise entre 15 et 45 % poids,
b) séparation à partir de l'effluent issu de l'étape a) d'un gaz contenant de l'hydrogène, du sulfure d'hydrogène formé dans l'étape a), d'au moins une coupe distillat incluant une fraction gazole et d'une fraction plus lourde que le gazole,
c) hydrotraitement, par contact avec au moins un catalyseur, d'au moins une partie de ladite coupe distillat obtenue dans l'étape b) incluant la fraction gazole, en mélange avec une charge issue de source renouvelable brute ou raffinée, ladite charge issue de source renouvelable contenant des huiles et/ou des graisses d'origine végétale et/ou animale et/ou de poisson et de produits dérivés de ces sources, lesdites huiles et/ou graisses étant brutes ou ayant préalablement subi un traitement de raffinage, ainsi que les mélanges de charges de telles origines, lesdites charges étant constituées de structures chimiques de type triglycérides et/ou acides gras, les proportions du mélange formé de la charge issue d'une source renouvelable et de la coupe distillat incluant une fraction gazole étant 1 à 75% en volume de charge issue d'une source renouvelable et 99% à 25% en volume de la coupe distillat incluant une fraction gazole, ladite étape c) étant opérée à une température comprise entre 180 et 310°C, une pression comprise entre 2 et 10 MPa, une vitesse spatiale horaire comprise entre 0,1 et 10 h⁻¹ et en présence de 200 à 5000 Nm³ d'hydrogène/m³ de charge ,
d) séparation de l'hydrogène, des gaz et d'au moins une coupe gazole à teneur en soufre d'au plus 10 ppm poids.

Un des avantages de l'invention réside dans le fait que l'étape a) d'hydrocraquage doux permet d'opérer à l'étape c) d'hydrotraitement dans des conditions opératoires moins sévères.

### Intérêt de l'invention.

Nous avons découvert qu'il est avantageux de traiter au niveau de ladite étape c/ d'hydrotraitement du procédé selon l'invention, en mélange avec la coupe gazole d'origine fossile issue de l'étape a) d'hydrocraquage doux, des charges issues de sources renouvelables qui sont les suivantes : les huiles végétales et/ou graisses animales, brutes ou ayant préalablement subi un traitement de raffinage plus ou moins poussé, ainsi que les mélanges de charges de telles origines. Ces charges sont généralement constituées de structures chimiques de type triglycérides et/ou acides gras, la structure chimique de ces derniers les positionnant dans la gamme de points d'ébullition coupe des hydrocarbures présents dans les gazoles. Généralement, les teneurs en soufre, en azote et en aromatiques sont faibles dans ce type de charges, en en tout état de cause moindres que dans les charges d'origine fossile.

De telles structures chimiques sont capables, dans les conditions opératoires de cette étape d'hydrotraitement c) du procédé selon l'invention, et avec les catalyseurs utilisés, d'être totalement converties en hydrocarbures de type paraffines. Le traitement de ce type de charges en mélange avec le gazole issu de l'hydrocraquage, présente les avantages suivants :
▪ diminution par effet de dilution, des teneurs en soufre, en azote et en aromatiques de la charge globalement à traiter au niveau de l'étape c/ d'hydrotraitement du procédé selon l'invention. Ceci permet de relaxer significativement les conditions opératoires requises au niveau de ce traitement, et de diminuer la consommation d'hydrogène de cette étape.
▪ l'hydrogénation de ces charges d'origine végétale et/ou animale est généralement exothermique. Le traitement en mélange avec une coupe gazole classique permet donc de "tamponner" cette exothermie, et de protéger ainsi le catalyseur pour lequel la formation de points chauds serait de nature à promouvoir la formation de coke, et donc de dégrader la stabilité des performances et de réduire la durée de cycle.
▪ améliorer la qualité de la coupe gazole globalement produite, et en particulier l'indice de cétane, du fait de la formation d'hydrocarbures de type paraffines linéaires, c'est-à-dire des hydrocarbures caractérisés par un excellent cétane, par hydrogénation des structures triglycérides et/ou acides gras.

### Description détaillée de l'invention.

Les charges traitées lors de l'étape a/ sont des charges lourdes, c'est-à-dire que 80 % pds bout au-dessus de 340°C. Leur point d'ébullition initial s'établit généralement à au moins 340°C , souvent à au moins 370°C voir au moins 400°C. Très avantageusement le procédé permet de traiter des charges ayant une température finale d'ébullition d'au moins 450°C et qui peut même aller au-delà de 650°C.

Leur teneur en soufre est d'au moins 0.05 % pds, souvent d'au moins 1 % et très souvent d'au moins 2 %, voire d'au moins 2,5 % pds. Des charges à 3 % de soufre ou plus conviennent bien dans ce procédé.

Les charges traitées dans l'étape a/ de la présente invention sont choisies dans le groupe formé par les distillats sous vide de distillation directe, les distillats sous vide issus de procédé de conversion tels que par exemple ceux provenant du coking, d'une hydroconversion en lit fixe (tels que ceux issus des procédés HYVAHL^{®}de traitement des lourds mis au point par la demanderesse) ou des procédés d'hydrotraitement des lourds en lit bouillonnant (tels que ceux issus des procédés H-OIL^{®} ), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL^{®} et H-OIL^{®}. Les charges peuvent aussi être formées par mélange de ces diverses fractions. Elles peuvent également contenir des coupes gazoles et gazoles lourds provenant du cracking catalytique ayant en général un intervalle de distillation d'environ 150°C à environ 370°C. Elles peuvent aussi contenir des extraits aromatiques et des paraffines obtenus dans le cadre de la fabrication d'huiles lubrifiantes. Selon la présente invention, les charges que l'on traite sont de préférence des distillats sous vide.

**Etape a)** - La charge telle que décrite ci-dessus est traitée dans l'étape a) par hydrocraquage doux.

L'hydrocraquage doux de l'étape a) est réalisé avec au moins un lit fixe d'au moins un catalyseur et il est produit un effluent hydrocraqué.

On opère sous une pression absolue de 2,5 à 7 MPa, à une température comprise entre 350 et 450°C. La vitesse spatiale horaire (VVH) et la pression partielle d'hydrogène sont choisies en fonction des caractéristiques du produit à traiter et de la conversion souhaitée. La VVH se situe dans une gamme comprise entre 0.2 h⁻¹ et 5 h⁻¹. La quantité totale d'hydrogène mélangé à la charge et entrant donc dans la zone dans laquelle est réalisée l'étape a) est habituellement comprise entre 200 et 1500 normaux mètres cube (Nm³) par mètre cube (m³) de charge liquide.

La conversion nette en produits bouillant en dessous de 360°C est de 15 et 45% dans ces conditions opératoires.

La pression partielle d'H₂S en sortie de l'étape a) est généralement comprise entre 0,1 et 0,4 MPa, de manière préférée, elle est maintenue entre 0,15 et 0,3 MPa et de manière très préférée comprise entre 0,15 et 0,25 MPa pour améliorer l'hydrodésulfuration.

Le catalyseur d'hydrocraquage doux utilisé dans l'étape a) du procédé selon l'invention peut avantageusement être un catalyseur classique d'hydroconversion comprenant, sur un support amorphe et au moins un métal ou composé de métal ayant une fonction hydrodéshydrogénante.

Ledit catalyseur est un catalyseur comprenant du nickel en association avec du molybdène. Le catalyseur utilisé dans l'étape a) comprend de 0,5 à 10 % en poids d'oxyde de nickel (NiO) et de préférence de 1 à 5 % en poids d'oxyde de nickel et de 1 à 30 % en poids d'oxyde de molybdène (MoOs), de préférence de 5 à 25 % en poids d'oxyde de molybdène, sur un support minéral amorphe, les pourcentages étant exprimés en % poids par rapport à la masse totale du catalyseur.

Les métaux des catalyseurs utilisés dans l'étape a) d'hydrotraitement du procédé selon l'invention sont avantageusement des métaux sulfurés.

La teneur totale en oxydes de métaux nickel et molybdène dans le catalyseur est avantageusement comprise entre 5 et 40 % en poids et de manière préférée comprise entre 7 et 30 % en poids par rapport à la masse totale du catalyseur.

Le rapport pondéral exprimé en oxyde métallique entre molybdène sur nickel est avantageusement compris entre 20 et 1 et de manière préférée entre 10 et 2.

Le support peut être par exemple choisi dans le groupe formé par l'alumine, la silice, les silices-alumines, la magnésie, les argiles et les mélanges d'au moins deux de ces minéraux. Ce support peut également renfermer d'autres composés tels que par exemple des oxydes choisis dans le groupe formé par l'oxyde de bore, la zircone, l'oxyde de titane, l'anhydride phosphorique. On utilise de manière préférée un support d'alumine, et de manière plus préférée, de l'alumine η, δ ou γ.

Ledit catalyseur d'hydrocraquage doux utilisé dans l'étape a) du procédé selon l'invention peut également avantageusement contenir un élément tel que du phosphore et/ou du bore et/ou du fluor. Cet élément peut être introduit dans la matrice ou de préférence être déposé sur le support. On peut également déposer du silicium sur le support, seul ou avec le phosphore et/ou le bore et/ou le fluor. Le phosphore et / ou le bore sont préférés.

La teneur en poids d'oxyde dudit élément est habituellement avantageusement inférieure à 20 % et de manière préférée inférieure à 10 % et elle est habituellement avantageusement d'au moins 0.001 %.

Des catalyseurs préférés d'hydrocraquage doux utilisés dans l'étape a) du procédé selon l'invention contiennent au moins le Nickel, au moins le Molybdène, du silicium déposé sur un support alumine et éventuellement du Phosphore et/ou du Bore également déposés sur ledit support alumine.

Un autre catalyseur préféré d'hydrocraquage doux utilisé dans l'étape a) du procédé selon l'invention comprend au moins un métal le Nickel et au moins le Molybdène et une silice-alumine.

Un autre type de catalyseur d'hydrocraquage doux utilisé dans l'étape a) est un catalyseur contenant au moins une matrice, au moins une zéolithe Y et au moins un métal hydrodéshydrogénant. Les matrices, métaux, éléments additionnels décrits précédemment peuvent également entrer dans la composition de ce catalyseur.

Des zéolites Y avantageuses sont décrites dans les demandes de brevets WO-00/71641, EP-911 077 ainsi que les brevets US-4,738,940 et US-4,738,941.

**Etape b)** Séparation de l'effluent hydrocraqué issu de l'étape a).

Dans l'étape b), ledit effluent hydrocraqué est soumis au moins en partie, et de préférence en totalité, à une ou plusieurs séparations.

Le but de cette étape est de séparer les gaz du liquide, et notamment, de récupérer l'hydrogène et l'essentiel du sulfure d'hydrogène H₂S formé dans l'étape a), et d'obtenir un effluent liquide exempt de H₂S dissous.

Ladite étape b) permet donc, à partir de l'effluent issu de l'étape a), la séparation du sulfure d'hydrogène H₂S, d'un gaz contenant de l'hydrogène, d'une coupe distillat incluant une fraction gazole et d'une fraction liquide plus lourde que le gazole,

Lors de la séparation du sulfure d'hydrogène H₂S du liquide, une partie de naphta peut être séparée. Cette partie est alors stabilisée par enlèvement du sulfure d'hydrogène H₂S. L'effluent liquide dépourvu de H₂S et éventuellement additionné du naphta stabilisé est distillé pour obtenir au moins une coupe distillat incluant une fraction gazole, et au moins une fraction liquide plus lourde que le gazole.

La coupe distillat est une coupe gazole ou une coupe gazole mélangée au naphta. Elle alimente l'étape c).

La fraction liquide plus lourde que la fraction gazole peut éventuellement être envoyée dans un procédé de craquage catalytique dans lequel elle est avantageusement traitée dans des conditions permettant de produire une fraction gazeuse, une fraction essence, une fraction gazole et une fraction plus lourde que la fraction gazole souvent dénommée par les hommes du métier fraction slurry.

Cette fraction liquide plus lourde que la fraction gazole peut également être utilisée comme fuel industriel basse teneur en soufre ou comme charge de craquage thermique.

Lorsque le naphta n'est pas envoyé au mélange avec le gazole à l'étape c), il est distillé. La fraction naphta obtenue peut avantageusement être séparée en essence lourde, qui de préférence sera une charge pour un procédé de reformage, et en essence légère qui, de préférence sera soumise à un procédé d'isomérisation des paraffines.

A la sortie de l'étape b), la coupe gazole présente le plus souvent une teneur en soufre comprise entre 100 et 500 ppm poids. La coupe gazole ne répond donc pas aux spécifications requises en soufre. Les autres caractéristiques du gazole sont également à un faible niveau ; par exemple, l'indice de cétane est de l'ordre de 45 et la teneur en aromatiques est supérieure à 20 % pds.

A la distillation les conditions sont généralement choisies de manière à ce que le point d'ébullition initial de la fraction lourde soit d'environ 340°C à environ 400°C et de préférence d'environ 350°C à environ 380°C et par exemple environ 360°C.

Pour le naphta, le point final d'ébullition est compris entre environ 120°C et 180°C.

Les points de coupe sont donnés à titre indicatif mais l'exploitant choisira le point de coupe en fonction de la qualité et de la quantité des produits souhaités, comme cela se pratique généralement.

**Etape c)** : Hydrotraitement d'au moins une partie de la coupe distillat incluant une fraction gazole issue de l'étape b) en mélange avec une charge issue d'une source renouvelable.

Dans ladite étape c) du procédé selon l'invention, au moins une partie, et de préférence la totalité de la coupe distillat incluant une fraction gazole subit un hydrotraitement afin de réduire la teneur en soufre en dessous de 10 ppm poids. Ladite coupe peut inclure le naphta en partie ou en totalité.

On ajoute à ladite coupe distillat incluant la fraction gazole, une coupe produite à l'extérieur du procédé selon l'invention, et qui n'est normalement pas incorporable directement au pool gazole. Ladite coupe produite à l'extérieur du procédé selon l'invention est une charge issue d'une source renouvelable.

Il s'agit donc de co-traiter dans l'étape c) du procédé selon l'invention un mélange formé d'une charge issue d'une source renouvelable et d'une coupe distillat incluant une fraction gazole. Les proportions du mélange formé de la charge issue d'une source renouvelable et de la coupe distillat incluant une fraction gazole sont 1 à 75% en volume de charge issue d'une source renouvelable pour 99% à 25% en volume de la coupe distillat incluant une fraction gazole.

On entend par charge issue d'une source renouvelable, des charges contenant des huiles et/ou des graisses d'origines végétale et/ou animale et/ou de poisson et de produits dérivés de ces sources, lesdites huiles et/ou graisses étant brutes ou ayant préalablement subi un traitement de raffinage plus ou moins poussé, ainsi que les mélanges de charges de telles origines. Lesdites charges sont constituées de structures chimiques de type triglycérides et/ou acides gras, la structure chimique de ces derniers les positionnant dans la gamme de points d'ébullition de coupes hydrocarbures présents dans les gazoles. Généralement, les teneurs en soufre, en azote et en aromatiques sont faibles dans ce type de charges, et en tout état de cause moindres que dans les charges d'origine fossile.

Avantageusement, on peut également ajouter à ladite coupe distillat incluant la fraction gazole une fraction d'hydrocarbures choisie dans le groupe formé par les LCO (Light cycle oil provenant de craquage catalytique en lit fluidisé).

L'hydrotraitement de l'étape c) du procédé selon l'invention opère sous une pression absolue comprise entre 2 et 10 MPa, de manière préférée comprise entre 2,5 et 9 MPa, et de manière encore plus préférée comprise entre 2,5 et 7 MPa. La température dans cette étape est comprise entre 180 et 310°C, de manière préférée comprise entre 200°C et 310°C. Cette température est habituellement ajustée en fonction du niveau souhaité d'hydrodésulfuration et/ou de saturation des aromatiques et doit être compatible avec la durée de cycle recherchée. La vitesse spatiale horaire (VVH) et la pression partielle d'hydrogène sont choisies en fonction des caractéristiques du produit à traiter et de la conversion souhaitée. La VVH se situe dans une gamme comprise entre 0,1 h⁻¹ et 10 h⁻¹ et de manière préférée comprise entre 0,1 h⁻¹ et 5 h⁻¹ et de manière encore plus préférée comprise entre 0,2 h⁻¹ et 2 h-1.

La quantité totale d'hydrogène mélangée à la charge est comprise entre 200 et 5000 normaux mètres cube (Nm³) par mètre cube (m³) de charge liquide et de manière préférée comprise entre 250 et 2000 Nm³/m³ et de manière encore plus préférée comprise entre 300 à 1500 Nm³/m³.

On opère de même avantageusement avec une pression partielle de l'hydrogène sulfuré réduite compatible avec la stabilité des catalyseurs sulfurés. Selon un mode de réalisation préféré du procédé selon la présente invention, la pression partielle de l'hydrogène sulfuré est de manière préférée inférieure à 0,05 MPa, de manière plus préférée inférieure à 0,03 MPa, et de manière encore plus préférée inférieure à 0,01 MPa.

Généralement, le catalyseur d'hydrotraitement utilisé dans l'étape c) du procédé selon l'invention doit avoir un fort pouvoir hydrogénant de façon à réaliser un raffinage profond des produits et à obtenir un abaissement important du soufre. Selon un mode de réalisation préféré du procédé selon la présente invention, la zone d'hydrotraitement opère à température relativement basse ce qui va dans le sens d'une hydrogénation profonde donc d'une amélioration de la teneur en aromatiques du produit et de son cétane et d'une limitation du cokage. On ne sortirait pas du cadre de la présente invention en utilisant dans la zone d'hydrotraitement de manière simultanée ou de manière successive un seul catalyseur ou plusieurs catalyseurs différents. Habituellement cette étape est effectuée industriellement dans un ou plusieurs réacteurs avec un ou plusieurs lits catalytiques et à courant descendant de liquide.

On utilise avantageusement dans l'étape c) d'hydrotraitement du procédé selon l'invention au moins un lit fixe de catalyseur d'hydrotraitement comprenant une fonction hydrodéshydrogénante et un support amorphe. On utilise de préférence un catalyseur dont le support est par exemple choisi dans le groupe formé par l'alumine, la silice, les silices-alumines, la magnésie, les argiles et les mélanges d'au moins deux de ces minéraux. On utilise de manière préférée un support d'alumine et mieux d'alumine η, δ ou γ. Ce support peut également renfermer d'autres composés et par exemple des oxydes choisis dans le groupe formé par l'oxyde de bore, la zircone, l'oxyde de titane, l'anhydride phosphorique.

La fonction hydrogénante du catalyseur de l'étape c) d'hydrotraitement du procédé selon l'invention est avantageusement assurée par au moins un métal du groupe VIII et/ou du groupe VI B.

Ledit catalyseur peut avantageusement comprendre au moins un métal du groupe VIII choisi parmi le cobalt et le nickel, et de manière préférée, en association avec au moins un métal du groupe VIB choisi parmi le molybdène et le tungstène.

De manière très préférée, on utilisera un catalyseur à base de Nickel et de Molybdène. Pour les gazoles difficiles à hydrotraiter et dès lors qu'une réduction significative des teneurs en aromatiques est recherchée, en particulier pour améliorer le cétane de la coupe gazole produite, le choix d'un catalyseur à base de Nickel et de Molybdène est généralement plus judicieux que celui d'un catalyseur à base de Cobalt et de Molybdène.

Un catalyseur préféré d'hydrotraitement utilisé dans l'étape c) du procédé selon l'invention est avantageusement un catalyseur comprenant un support minéral amorphe, une teneur en poids d'oxyde de nickel comprise entre 0,5 et 10 % en poids et de manière préférée comprise entre 1 et 5 % en poids par rapport à la masse totale du catalyseur et une teneur en poids d'oxyde de molybdène comprise entre 1 et 30 % en poids et de manière préférée comprise entre 5 et 25 % en poids par rapport à la masse totale du catalyseur.

Les métaux des catalyseurs utilisés dans l'étape c) d'hydrotraitement du procédé selon l'invention sont avantageusement des métaux sulfurés.

La teneur totale en oxydes de métaux des groupes VI et VIII dans ledit catalyseur est avantageusement comprise entre 5 et 40 % en poids et de manière préférée comprise entre 7 et 30 % en poids par rapport à la masse totale du catalyseur.

Le rapport pondéral exprimé en oxyde métallique entre métal (ou métaux) du groupe VI sur métal (ou métaux) du groupe VIII est avantageusement compris entre 20 et 1 et de manière préférée entre 10 et 2.

Ledit catalyseur d'hydrotraitement utilisé dans l'étape c) du procédé selon l'invention peut également avantageusement contenir un élément tel que du phosphore et/ou du bore et/ou du fluor. Cet élément peut être introduit dans la matrice ou de préférence être déposé sur le support. On peut également déposer du silicium sur le support, seul ou avec le phosphore et/ou le bore et/ou le fluor. Le phosphore et/ou le bore sont préférés.

La teneur en poids d'oxyde dudit élément est habituellement avantageusement inférieure à 20 % et de manière préférée inférieure à 10 % et elle est habituellement avantageusement d'au moins 0,001 %.

Des catalyseurs préférés d'hydrotraitement utilisé dans l'étape c) du procédé selon l'invention contiennent au moins un métal du Groupe VIII, de préférence choisis parmi le Nickel et le Cobalt, au moins un métal du Groupe VIB, de préférence choisis parmi le Molybdène et le Tungstène, du silicium déposé sur un support alumine et éventuellement du Phosphore et/ou du Bore également déposés sur ledit support alumine.

Dans un mode de réalisation préféré du procédé selon l'invention, on introduit de l'hydrogène d'appoint dans l'étape c/ d'hydrotraitement, de façon à maximiser la pression partielle d'hydrogène au niveau de cette étape, ce qui permet d'améliorer la qualité des coupes gazoles produites et de favoriser le traitement des charges issues des sources renouvelables tout en minimisant les investissements nécessaires.

De préférence, la quantité d'hydrogène d'appoint introduite à cette étape c), est supérieure à la consommation chimique d'hydrogène nécessaire pour obtenir les performances fixées dans les conditions opératoires fixées pour cette étape c).

Dans un mode de réalisation préféré du procédé selon l'invention, la totalité de l'hydrogène d'appoint nécessaire au procédé est introduite dans l'étape c).

Ainsi, dans le procédé selon l'invention, l'hydrogène d'appoint peut donc être avantageusement introduit :
- au niveau de l'étape a) uniquement,
- au niveau de l'étape c) uniquement,
- au niveau des étapes a et c) de façon à tenir compte de la consommation chimique de l'hydrogène sur l'étape a) de façon à amener l'hydrogène nécessaire pour l'hydrogénation recherchée également dans l'étape a).

Une autre conséquence est qu'il est possible d'optimiser l'appoint en hydrogène dans l'étape c) selon le niveau réfractaire du mélange gazoles et charge issue d'une source renouvelable à traiter.

Cette disposition avantageuse de l'invention permet ainsi d'améliorer sensiblement les performances du catalyseur d'hydrotraitement et en particulier l'hydrodésulfuration pour des conditions de température et de pression totale données et qui correspondent à des valeurs industriellement praticables.

En effet, elle permet de maximiser la pression partielle hydrogène, donc la performance, dans l'étape c) du procédé selon l'invention, tout en maintenant une pression totale des étapes a) et c) (et donc leur coût en investissement) quasiment identique.

Ainsi, dans le cas où on utilise dans l'étape a) d'hydrocraquage doux, des charges très soufrées telles que par exemple des charges ayant au moins 1 % poids de soufre, de préférence au moins 2 % poids de soufre, lesdites charges produisant des gazoles de conversion réfractaires et soufrés, il est devenu possible d'obtenir des distillats moyens de bonnes qualités en particulier avec une faible teneur en soufre dans des conditions notamment de pression relativement basse et ainsi de limiter le coût des investissements nécessaires.

**Etape d)** : Séparation finale de l'effluent hydrotraité issu de l'étape c).

L'étape d) de séparation du procédé selon l'invention est réalisée sur une partie au moins, et de préférence la totalité de l'effluent hydrotraité issu de l'étape c) de manière à séparer l'hydrogène, les gaz tels que par exemple le sulfure d'hydrogène, les gaz issus du co-traitement des charges issues des sources renouvelables tels que par exemple le monoxyde de carbone, le dioxyde de carbone et de la vapeur d'eau et au moins une coupe gazole liquide à teneur en soufre inférieure à 10 ppm poids.

L'hydrogène est séparé de l'effluent.

Le sulfure d'hydrogène est également séparé de l'effluent liquide et ainsi il est obtenu un gazole à moins de 10 ppm poids de soufre.

Généralement, une coupe naphta est également obtenue.

### Produits obtenus

Le gazole obtenu présente une teneur en soufre inférieure à 10 ppm.

Par ailleurs, l'indice de cétane a été amélioré de 1 à 20 points, généralement de 1 à 18, ou encore de 1 à 15 points et de manière plus préférée de 1 à 12 points par rapport au gazole entrant en hydrotraitement.

Sa quantité totale d'aromatiques a été également réduite d'au moins 10 %, la réduction peut aller même jusqu'à 90 %.

La quantité de polyaromatiques dans le gazole final est d'au plus 11 % pds.

### Installation

L'invention utilise une installation de traitement de charges pétrolières dont au moins 80 % pds bout au-dessus de 340°C et contenant au moins 0,05 % de soufre comprenant :
a) une zone (I) d'hydrocraquage doux contenant au moins un lit fixe de catalyseur d'hydrocraquage, comprenant de 0,5 à 10 % en poids d'oxyde de nickel et de 1 à 30 % en poids d'oxyde de molybdène, sur un support minéral amorphe, et munie d'une conduite (1) pour l'introduction de la charge à traiter, d'une conduite (2) pour la sortie de l'effluent hydrocraqué, et d'une conduite (29) pour l'introduction de l'hydrogène,
b) une zone (II) de séparation incluant au moins un séparateur (3) (6) pour séparer le gaz riche en hydrogène par la conduite (4), pour séparer dans la conduite (7) le sulfure d'hydrogène et obtenir dans la conduite (8) une fraction liquide, et incluant également une colonne de distillation (9) pour séparer au moins une coupe distillat incluant une fraction gazole dans la conduite (11) et une fraction lourde dans la conduite (10),
c) une zone (III) d'hydrotraitement contenant au moins un lit fixe de catalyseur d'hydrotraitement pour traiter la fraction gazole obtenue à l'issue de l'étape b). L'opération selon l'invention consiste à traiter cette charge en mélange avec une charge externe issue d'une source renouvelable. Cette zone est munie d'une conduite pour l'introduction de l'hydrogène, d'une conduite (19) pour l'introduction de la coupe issue de la source renouvelable, de préférence, ladite conduite (19) débouche dans la conduite d'amenée de la coupe gazole (11) et d'une conduite (12) pour la sortie de l'effluent hydrotraité,
d) une zone (IV) de séparation incluant au moins un séparateur (13) (16) pour séparer l'hydrogène par la conduite (14), pour séparer dans la conduite (17) le sulfure d'hydrogène et les gaz éventuellement produits par hydrotraitement de la charge extérieure issue d'une source renouvelable et par la conduite (18) un gazole ayant une teneur en soufre inférieure à 10 ppm.

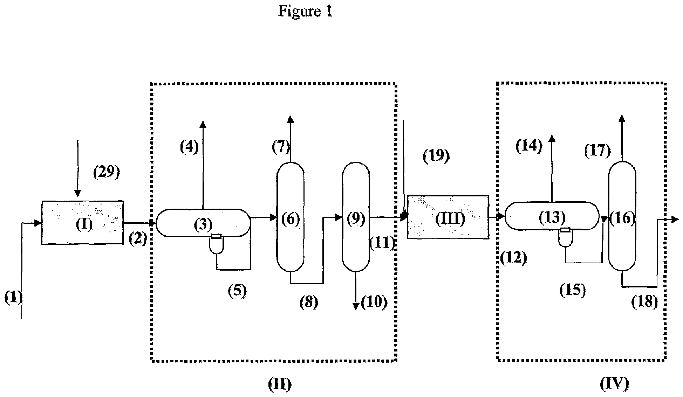

Elle sera mieux comprise à partir de la figure 1 qui illustre un mode de réalisation préféré de l'invention.

La charge à traiter (telle que définie précédemment) entre par une conduite (1) dans une zone (I) d'hydrocraquage doux qui contient au moins un lit fixe d'un catalyseur d'hydrocraquage, comprenant de 0,5 à 10 % en poids d'oxyde de nickel et de 1 à 30 % en poids d'oxyde de molybdène, sur un support minéral amorphe. L'effluent hydrocraqué obtenu dans la conduite (2) est envoyé dans la zone (II) de séparation.

L'effluent hydrocraqué passe d'abord dans un séparateur (3) séparant d'une part un gaz contenant de l'hydrogène (phase gazeuse) dans la conduite (4) et d'autre part un effluent liquide dans la conduite (5). On peut utiliser un séparateur chaud suivi d'un séparateur froid (préféré) ou un séparateur froid uniquement.

L'effluent liquide est envoyé dans un séparateur (6), et qui est de préférence un strippeur à la vapeur, pour séparer le sulfure d'hydrogène de l'effluent hydrocarboné. Dans le même temps, au moins une partie de la fraction naphta peut être séparée avec le sulfure d'hydrogène. Le sulfure d'hydrogène avec ledit naphta sort par la conduite (7) tandis que l'effluent hydrocarboné est obtenu dans la conduite (8).

L'effluent hydrocarboné passe ensuite dans une colonne à distiller (9) et il est séparé au moins une coupe distillat incluant une fraction gazole et se retrouvant dans la conduite (11), il est également séparé une fraction plus lourde que le gazole et se retrouvant dans la conduite (10).

En général le naphta séparé au niveau du séparateur (6) est stabilisé (H₂S éliminé). Dans une disposition avantageuse, le naphta stabilisé est injecté dans l'effluent entrant à la colonne (9).

Au niveau de la colonne (9), le naphta peut être séparé dans une conduite supplémentaire non représentée sur la figure 1.

Selon la figure 1, la colonne (9) sépare une fraction gazole mélangée au naphta, dans la conduite (11). La fraction de la conduite (10) est avantageusement envoyée dans la zone (V) de craquage catalytique non représenté sur la figure 1.

Par ailleurs, il est produit une charge de très bonne qualité pour le craquage catalytique (basse teneur en soufre et azote, enrichissement modéré en hydrogène).

Le naphta obtenu séparément, additionné éventuellement du naphta séparé dans la zone (IV) est avantageusement séparé en essences lourde et légère, l'essence lourde étant envoyée dans une zone de reformage et l'essence légère dans une zone où est réalisée l'isomérisation des paraffines.

Sur la figure 1, on a schématisé en lignes pointillées la zone (II) de séparation formée de séparateurs (3) (6) et de la colonne (9).

La coupe distillat incluant la fraction gazole obtenue à la sortie de la zone II de séparation est ensuite envoyée par la conduite (11), additionnée d'une coupe externe issue d'une source renouvelable dans une zone (III) d'hydrotraitement munie d'au moins un lit fixe d'un catalyseur d'hydrotraitement, via une conduite (19) débouchant dans la conduite (11).

L'effluent hydrotraité obtenu sort par la conduite (12) pour être envoyé dans la zone (IV) de séparation schématisée en pointillés sur la figure 1.

Elle comporte ici un séparateur (13), de préférence un séparateur froid, où sont séparés une phase gazeuse sortant par la conduite (14) et une phase liquide sortant par la conduite (15).

La phase liquide est envoyée dans un séparateur (16) de préférence un strippeur, pour enlever le sulfure d'hydrogène sortant dans la conduite (17), le plus souvent en mélange avec le naphta. Il est soutiré une fraction gazole par la conduite (18), fraction qui est conforme aux spécifications sur le soufre i.e. ayant moins de 10 ppm. Le mélange H₂S - naphta est ensuite éventuellement traité pour récupérer la fraction naphta purifiée.

Dans la réalisation préférée de la figure 1, la totalité de l'hydrogène d'appoint est introduit par la conduite (30) au niveau de la zone (II). Dans cette réalisation, il n'y a pas de conduite amenant de l'hydrogène d'appoint au niveau de zone (I).

Dans une autre réalisation, on peut prévoir une conduite amenant de l'hydrogène d'appoint au niveau de la zone (I).

Une réalisation avantageuse comporte, pour l'hydrogène d'appoint, une conduite au niveau de la zone (I) et une conduite au niveau de la zone (II).

### Traitement et recyclage de l'hydrogène

Le gaz contenant l'hydrogène qui a été séparé dans l'étape b) est, si nécessaire, au moins en partie traité pour réduire sa teneur en H₂S (de préférence par lavage avec au moins une amine) avant de le recycler dans l'étape a) et éventuellement dans l'étape c).

Le gaz de recyclage contient, de préférence, une quantité H₂S supérieure à 0 % et jusqu'à 1 % mol. Avantageusement cette quantité est au moins 15 ppm, de préférence d'au moins 0,1 %, voire d'au au moins 0,2 % mol.

La présence de l' H₂S est utile pour maintenir les catalyseurs à l'état sulfuré dans les étapes a) et c) mais un excès de H₂S pourrait réduire l'hydrodésulfuration.

A l'hydrogène issu de l'étape b) éventuellement purifié, est additionné l'hydrogène séparé dans l'étape d). Le mélange est re-comprimé puis recyclé vers l'étape a) et éventuellement vers l'étape c).

En effet, dans le cas où de l'hydrogène d'appoint est introduit dans l'étape c), le recycle vers l'étape c) peut ne pas être nécessaire, notamment lorsque tout l'hydrogène d'appoint est introduit à l'étape c).

On peut avantageusement introduire l'hydrogène de recycle avec la charge entrant dans l'étape a) et/ou sous forme d'hydrogène de trempe entre les lits de catalyseurs.

### Exemple

Cet exemple illustre l'invention sans la limiter.

Cet exemple a été obtenu dans une unité pilote qui diffère d'une unité industrielle par le fait que les fluides sont en mode up-flow ou courant ascendant dans l'unité pilote. Il a été montré ailleurs que ce mode d'opération en unité pilote donne des résultats qui sont équivalents à ceux d'une unité industrielle opérant en mode tickle bed ou lit ruisselant.

### Exemple 1

### étape a) :

La charge subissant l'hydrocraquage doux est un distillat sous vide contenant 3 % poids de soufre. La conversion de l'intervalle de distillation dans la zone d'hydrocraquage est de 35 % de la fraction 360°C+. La pureté en hydrogène du gaz de recyclage est de 78.8 % mol. La pression partielle d'hydrogène est alors de 5,6 Mpa en sortie de la section d'hydrocraquage. La pression totale est de 4 MPa, la température est de 380°C, la VVH est de 1 h-1 et la quantité d'hydrogène/m³ de charge est de 320 Nm³ d'hydrogène/m³ de charge.

La charge est mise en contact avec un catalyseur d'hydrocraquage doux en lit fixe. Ce catalyseur contient un support alumine, une teneur en oxyde de nickel de 4,3 % poids, la teneur en MoO₃ est de 21 % pds et la teneur en P₂O₅ de 5 % poids.

### étape b) :

Après séparation une coupe gazole est obtenue contenant 250 ppm poids de soufre.

Le procédé est opéré selon le schéma de la figure 1 excepté que l'appoint d'H₂ est dédié à chaque unité d'hydrocraquage et d'hydrotraitement. Le recyclage du gaz riche en hydrogène est commun aux deux unités avec un lavage aux amines du gaz séparé à l'étape b).

### étape c) :

La coupe gazole obtenue dans l'étape b), est mélangée à une huile végétale de colza préraffinée. Le mélange ainsi obtenu est composé à 70% poids du gazole partiellement désulfuré issu de l'étape a), et à 30% poids de l'huile végétale de colza préraffinée. Ce mélange est hydrotraité par contact avec le même catalyseur d'hydrotraitement utilisé lors de l'étape a), à savoir un catalyseur de type NiMoP sur alumine, sous forme sulfure.

Les conditions opératoires utilisées pour obtenir une coupe gazole ayant moins de 50 ppm de soufre sont :
Pression totale : 4 MPa
Vitesse spatiale (VVH) = 1 h-1
Température de réaction = 310°C
Quantité d'hydrogène : 320 Nm³ d'hydrogène/m³ de charge.

Après séparation de l'effluent obtenu en sortie de l'étape c) d'hydrotraitement du procédé selon l'invention, les caractéristiques du gazole obtenu sont les suivantes :
Soufre : 7 ppm poids
Indice de cétane : 72
Densité : 837 kg/m3

## Revendications

1. Procédé de traitement de charges pétrolières dont au moins 80 % poids bout au-dessus de 340°C, et contenant au moins 0,05 % poids de soufre, lesdites charges pétrolières étant choisies dans le groupe formé par les distillats sous vide de distillation directe, les distillats sous vide issus de procédé de conversion, les huiles désasphaltées, les résidus issus des procédés de conversion des charges lourdes, pris seuls ou en mélange, pour produire au moins une coupe gazole à teneur en soufre d'au plus 10 ppm poids, ledit procédé comprenant les étapes suivantes :
a) hydrocraquage doux en lit fixe d'au moins un catalyseur comprenant de 0,5 à 10 % en poids d'oxyde de nickel et de 1 à 30 % en poids d'oxyde de molybdène, sur un support minéral amorphe, à une température comprise entre 350 et 450°C, une pression comprise entre 2,5 MPa et 7 MPa, une vitesse spatiale horaire comprise entre 0,2 h⁻¹ et 5 h⁻¹ et en présence de 200 à 1500 Nm3 d'hydrogène/m3 de charge, de sorte que la conversion nette en produits bouillant en-dessous de 360°C étant comprise entre 15 et 45 % poids,
b) séparation à partir de l'effluent issu de l'étape a) d'un gaz contenant de l'hydrogène, du sulfure d'hydrogène formé dans l'étape a), d'au moins une coupe distillat incluant une fraction gazole et d'une fraction plus lourde que le gazole,
c) hydrotraitement, par contact avec au moins un catalyseur, d'au moins une partie de ladite coupe distillat obtenue dans l'étape b) incluant la fraction gazole, en mélange avec une charge issue de source renouvelable brute ou raffinée, ladite charge issue de source renouvelable contenant des huiles et/ou des graisses d'origine végétale et/ou animale et/ou de poisson et de produits dérivés de ces sources, lesdites huiles et/ou graisses étant brutes ou ayant préalablement subi un traitement de raffinage, ainsi que les mélanges de charges de telles origines, lesdites charges étant constituées de structures chimiques de type triglycérides et/ou acides gras, les proportions du mélange formé de la charge issue d'une source renouvelable et de la coupe distillat incluant une fraction gazole étant 1 à 75% en volume de charge issue d'une source renouvelable et 99% à 25% en volume de la coupe distillat incluant une fraction gazole, ladite étape c) étant opérée à une température comprise entre 180 et 310°C, une pression comprise entre 2 et 10 MPa, une vitesse spatiale horaire comprise entre 0,1 et 10 h⁻¹ et en présence de 200 à 5000 Nm³ d'hydrogène/m³ de charge ,
d) séparation de l'hydrogène, des gaz et d'au moins une coupe gazole à teneur en soufre d'au plus 10 ppm poids.

2. Procédé selon la revendication 1 dans lequel les charges utilisées dans l'étape a/ contiennent également des coupes gazoles et gazoles lourds provenant du cracking catalytique.

3. Procédé selon l'une des revendications 1 à 2 dans lequel la pression partielle d'H₂S en sortie de l'étape a) est généralement comprise entre 0,1 et 0,4 MPa.

4. Procédé selon la revendication 1 dans lequel le support est choisi dans le groupe formé par l'alumine, la silice, les silices-alumines, la magnésie, les argiles et les mélanges d'au moins deux de ces minéraux.

5. Procédé selon l'une des revendications 1 à 4 dans lequel le catalyseur comprend du phosphore et/ou du bore et/ou du fluor.

6. Procédé selon la revendication 5 dans lequel la teneur en poids d'oxyde du phosphore et/ou du bore et/ou du fluor est inférieure à 20 % et est d'au moins 0,001 %.

7. Procédé selon l'une des revendications précédentes dans lequel l'étape c) d'hydrotraitement opère à une température comprise entre 200 et 310°C, sous une pression comprise entre 3 et 7 MPa, à une vitesse spatiale horaire comprise entre 0,2 h⁻¹ et 2 h⁻¹ et en présence de 300 à 1500 Nm3 d'hydrogène/m3 de charge.

8. Procédé selon l'une des revendications précédentes dans lequel le catalyseur utilisé dans l'étape c) d'hydrotraitement comprend de 0,5 à 10 % en poids d'oxyde de nickel et de 1 à 30 % en poids d'oxyde de molybdène, sur un support minéral.

9. Procédé selon la revendication 8 dans lequel le support est choisi dans le groupe formé par l'alumine, la silice, les silices-alumines, la magnésie, les argiles et les mélanges d'au moins deux de ces minéraux.

10. Procédé selon l'une des revendications 8 et 9 dans lequel le catalyseur comprend du phosphore et/ou du bore et/ou du fluor.

11. Procédé selon la revendication 10 dans lequel la teneur en poids d'oxyde du phosphore et/ou du bore et/ou du fluor est inférieure à 20 % et est d'au moins 0.001 %.

12. Procédé selon l'une des revendications 8 à 11 dans lequel, dans l'étape c), la pression partielle de l'hydrogène sulfuré est inférieure à 0.05 MPa, de manière plus préférée inférieure à 0.03 MPa, et de manière encore plus préférée inférieure à 0.01 MPa.

## Patentansprüche

1. Verfahren zur Behandlung von Erdöl-Einsatzmaterialien, wobei mindestens 80 Gew.-% davon oberhalb von 340 °C sieden, und die mindestens 0,05 Gew.- % Schwefel enthalten, wobei die Erdöl-Einsatzmaterialien ausgewählt sind aus der Gruppe bestehend aus Straight-run-Vakuumdestillaten, Vakuumdestillaten aus einem Konvertierungsverfahren, deasphaltierten Ölen, Rückständen aus Konvertierungsverfahren von schweren Einsatzmaterialien, allein oder als Mischung, zur Herstellung mindestens eines Gasölschnitts mit einem Schwefelgehalt von höchstens 10 Gewichts-ppm, wobei das Verfahren die folgenden Schritte umfasst:
a) ein mildes Hydrocracken in einem Festbett mindestens eines Katalysators, der von 0,5 bis 10 Gew.-% Nickeloxid und von 1 bis 30 Gew.-% Molybdänoxid auf einem amorphen mineralischen Träger umfasst, bei einer Temperatur zwischen 350 und 450 °C, einem Druck zwischen 2,5 MPa und 7 MPa, einer stündlichen Raumgeschwindigkeit zwischen 0,2 h⁻¹ und 5 h⁻¹ und in Gegenwart von 200 bis 1500 Nm³ Wasserstoff/m³ Einsatzmaterial so, dass der Nettoumsatz von unter 360 °C siedenden Produkten zwischen 15 und 45 Gew.-% beträgt,
b) eine Abtrennung eines Gases, das Wasserstoff, in Schritt a) gebildeten Schwefelwasserstoff umfasst, mindestens eines Destillatschnitts, der eine Gasölfraktion und eine Fraktion einschließt, die schwerer als Gasöl ist, von dem Abstrom aus Schritt a),
c) ein Hydrotreating durch Kontakt mit mindestens einem Katalysator zumindest eines Teils des in Schritt b) erhaltenen, die Gasölfraktion einschließenden Destillatschnitts als Mischung mit einem Einsatzmaterial aus einer rohen oder raffinierten erneuerbaren Quelle, wobei das Einsatzmaterial aus einer erneuerbaren Quelle Öle und/oder Fette mit einer Herkunft von Pflanzen und/oder Tieren und/oder Fischen und von diesen Quellen stammende Produkte, wobei die Öle und/oder Fette roh sind oder zuvor einer Raffinationsbehandlung unterzogen wurden, sowie Mischungen von Einsatzmaterialien dieser Herkünfte enthält, wobei die Einsatzmaterialien aus chemischen Strukturen vom Triglycerid- und/oder Fettsäuretyp bestehen, die Anteile der Mischung, die aus dem Einsatzmaterial aus einer erneuerbaren Quelle und dem Destillatschnitt gebildet ist, eine Gasölfraktion einschließen, bei der es sich um 1 bis 75 Vol.-% eines Einsatzmaterials aus einer erneuerbaren Quelle und 99 Vol.-% bis 25 Vol.-% des Destillatschnitts handelt, der eine Gasölfraktion einschließt, wobei Schritt c) bei einer Temperatur zwischen 180 und 310 °C, einem Druck zwischen 2 und 10 MPa, einer stündlichen Raumgeschwindigkeit zwischen 0,1 und 10 h⁻¹ und in Gegenwart von 200 bis 5000 Nm³ Wasserstoff/m³ Einsatzmaterial betrieben wird,
d) eine Abtrennung von Wasserstoff, Gasen und mindestens einem Gasölschnitt mit einem Schwefelgehalt von höchstens 10 Gewichts-ppm.

2. Verfahren nach Anspruch 1, wobei die in Schritt a) verwendeten Einsatzmaterialien auch Gasöl- und schwere Gasölschnitte enthalten, die von einem katalytischen Cracken stammen.

3. Verfahren nach einem der Ansprüche 1 bis 2, wobei der H₂S-Partialdruck am Auslass von Schritt a) im Allgemeinen zwischen 0,1 und 0,4 MPa beträgt.

4. Verfahren nach Anspruch 1, wobei der Träger ausgewählt ist aus der Gruppe bestehend aus Aluminiumoxid, Siliciumdioxid, Siliciumdioxiden-Aluminiumoxiden, Magnesiumoxid, Tonen und den Mischungen von mindestens zwei dieser Mineralien.

5. Verfahren nach einem der Ansprüche 1 bis 4, wobei der Katalysator Phosphor und/oder Bor und/oder Fluor umfasst.

6. Verfahren nach Anspruch 5, wobei der Gewichtsgehalt von Phosphoroxid und/oder Boroxid und/oder Fluoroxid weniger als 20 % beträgt und mindestens 0,001 % beträgt.

7. Verfahren nach einem der vorhergehenden Ansprüche, wobei der Hydrotreating-Schritt c) bei einer Temperatur zwischen 200 und 310 °C, unter einem Druck zwischen 3 und 7 MPa, bei einer stündlichen Raumgeschwindigkeit zwischen 0,2 h⁻¹ und 2 h⁻¹ und in Gegenwart von 300 bis 1500 Nm³ Wasserstoff/m³ Einsatzmaterial betrieben wird.

8. Verfahren nach einem der vorhergehenden Ansprüche, wobei der im Hydrotreating-Schritt c) verwendete Katalysator von 0,5 bis 10 Gew.-% Nickeloxid und von 1 bis 30 Gew.-% Molybdänoxid auf einem mineralischen Träger umfasst.

9. Verfahren nach Anspruch 8, wobei der Träger ausgewählt ist aus der Gruppe bestehend aus Aluminiumoxid, Siliciumdioxid, Siliciumdioxiden-Aluminiumoxiden, Magnesiumoxid, Tonen und Mischungen von mindestens zwei dieser Mineralien.

10. Verfahren nach einem der Ansprüche 8 und 9, wobei der Katalysator Phosphor und/oder Bor und/oder Fluor umfasst.

11. Verfahren nach Anspruch 10, wobei der Gewichtsgehalt von Phosphoroxid und/oder Boroxid und/oder Fluoroxid weniger als 20 % beträgt und mindestens 0,001 % beträgt.

12. Verfahren nach einem der Ansprüche 8 bis 11, wobei in Schritt c) der Schwefelwasserstoff-Partialdruck weniger als 0,05 MPa, besonders bevorzugt weniger als 0,03 MPa und noch mehr bevorzugt weniger als 0,01 MPa beträgt.

## Claims

1. Process for the treatment of petroleum-based feedstocks, at least 80% by weight of which boils above 340°C and which comprise at least 0.05% by weight of sulfur, said petroleum-based feedstocks being chosen from the group formed by straight-run vacuum distillates, vacuum distillates resulting from a conversion process, deasphalted oils or residues resulting from processes for the conversion of heavy feedstocks, taken alone or as a mixture, in order to produce at least one gas oil cut with a sulfur content of at most 10 ppm by weight, said process comprising the following stages:
a) mild hydrocracking in a fixed bed of at least one catalyst comprising from 0.5 to 10% by weight of nickel oxide and from 1 to 30% by weight of molybdenum oxide, on an amorphous inorganic support, at a temperature of between 350 and 450°C, a pressure of between 2.5 MPa and 7 MPa, an hourly space velocity of between 0.2 h⁻¹ and 5 h⁻¹ and in the presence of 200 to 1500 Sm³ of hydrogen/m³ of feedstock, such that the net conversion to products boiling below 360°C is between 15 and 45% by weight,
b) separation, from the effluent resulting from stage a), of a gas comprising hydrogen, of the hydrogen sulphide formed in stage a), of at least one distillate cut including a gas oil fraction and of a fraction which is heavier than gas oil,
c) hydrotreatment, by contact with at least one catalyst, of at least a portion of said distillate cut obtained in stage b) including the gas oil fraction, as a mixture with a feedstock resulting from a crude or refined renewable source, said feedstock resulting from a renewable source comprising oils and/or fats of vegetable and/or animal and/or fish origin and products derived from these sources, said oils and/or fats being crude or having been subjected beforehand to a refining treatment, and also mixtures of feedstocks of such origins, said feedstocks being composed of chemical structures of the type of triglycerides and/or fatty acids, the proportions of the mixture formed of the feedstock resulting from a renewable source and of the distillate cut including a gas oil fraction being 1 to 75% by volume of feedstock resulting from a renewable source and 99% to 25% by volume of the distillate cut including a gas oil fraction, said stage c) being carried out at a temperature of between 180 and 310°C, a pressure of between 2 and 10 MPa, an hourly space velocity of between 0.1 and 10 h⁻¹ and in the presence of 200 to 5000 Sm³ of hydrogen/m³ of feedstock,
d) separation of the hydrogen, of the gases and of at least one gas oil cut with a sulfur content of at most 10 ppm by weight.

2. Process according to Claim 1, in which the feedstocks used in stage a) also comprise gas oil and heavy gas oil cuts originating from catalytic cracking.

3. Process according to either of Claims 1 and 2, in which the H₂S partial pressure at the outlet of stage a) is generally between 0.1 and 0.4 MPa.

4. Process according to Claim 1, in which the support is chosen from the group formed by alumina, silica, silica/aluminas, magnesia, clays and mixtures of at least two of these minerals.

5. Process according to one of Claims 1 to 4, in which the catalyst comprises phosphorus and/or boron and/or fluorine.

6. Process according to Claim 5, in which the content by weight of oxide of phosphorus and/or of boron and/or of fluorine is less than 20% and is at least 0.001%.

7. Process according to one of the preceding claims, in which the hydrotreatment stage c) is carried out at a temperature of between 200 and 310°C, under a pressure of between 3 and 7 MPa, at an hourly space velocity of between 0.2 h⁻¹ and 2 h⁻¹ and in the presence of 300 to 1500 Sm³ of hydrogen/m³ of feedstock.

8. Process according to one of the preceding claims, in which the catalyst used in the hydrotreatment stage c) comprises from 0.5 to 10% by weight of nickel oxide and from 1 to 30% by weight of molybdenum oxide, on an inorganic support.

9. Process according to Claim 8, in which the support is chosen from the group formed by alumina, silica, silica/aluminas, magnesia, clays and mixtures of at least two of these minerals.

10. Process according to either of Claims 8 and 9, in which the catalyst comprises phosphorus and/or boron and/or fluorine.

11. Process according to Claim 10, in which the content by weight of oxide of phosphorus and/or of boron and/or of fluorine is less than 20% and is at least 0.001%.

12. Process according to one of Claims 8 to 11, in which, in stage c), the hydrogen sulphide partial pressure is less than 0.05 MPa, more preferably less than 0.03 MPa and more preferably still less than 0.01 MPa.
